Europäisches Patentamt

European Patent Office

Office européen des brevets

(11) Veröffentlichungsnummer: **0 110 392**
**B1**

(12) **EUROPÄISCHE PATENTSCHRIFT**

(45) Veröffentlichungstag der Patentschrift:
**13.07.88**

(21) Anmeldenummer: **83112003.5**

(22) Anmeldetag: **30.11.83**

(51) Int. Cl.⁴: **H 04 B 7/26**

(54) **Digitales Funkübertragungssystem.**

(30) Priorität: **01.12.82 DE 3244353**

(43) Veröffentlichungstag der Anmeldung:
**13.06.84 Patentblatt 84/24**

(45) Bekanntmachung des Hinweises auf die Patenterteilung:
**13.07.88 Patentblatt 88/28**

(84) Benannte Vertragsstaaten:
**DE FR GB IT**

(56) Entgegenhaltungen:
**EP - A - 0 082 054**

**IEE PROCEEDINGS, Band 129, Heft 3, Teil F, Juni 1982, Seiten 213-222, Old Woking, Surrey, GB; P.J. MUNDAY et al.: "Jaguar-V frequency-hopping radio system"**

(73) Patentinhaber: **ALCATEL N.V.,**
**Strawinskylaan 537 (World Trade Center), NL-1077 XX Amsterdam (NL)**

(84) Benannte Vertragsstaaten: **FR GB IT**

(73) Patentinhaber: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Erbes, Norbert, Dr., Wingertgasse 16, D-7500 Karlsruhe 41 (DE)**
Erfinder: **Sauder, Rolf, Tannenstrasse 11, D-7507 Pfinztal (DE)**

(74) Vertreter: **Schmidt, Werner, Dipl.-Phys. et al, Standard Elektrik Lorenz AG Patent- und Lizenzwesen Postfach 30 09 29, D-7000 Stuttgart 30 (DE)**

## Beschreibung

Die Erfindung bezieht sich auf ein digitales Funkübertragungssystem gemäss dem Oberbegriff des Anspruchs.

Ein Funkübertragungssystem dieser Art ist z.B. aus der Druckschrift «IEEE Proceedings», Band 129, Heft 3, Teil F, Juni 1982, Seiten 213 bis 222, bekannt.

Bei mobilen Stationen ist es jedoch nicht immer gewährleistet, dass eine Verbindung zwischen allen Stationen gegeben ist. Dies kann durch Verlassen des Funkbereiches, Einfahren in einen Funkschatten oder auch, insbesondere bei militärischem Einsatz, durch zeitweises Abschalten der Station bis auf die Zeitmesseinrichtung zum Zwekke der Peilverhinderung geschehen. Durch die immer vorhandenen Funklaufzeiten ergibt sich bei diesem System ein ständig sich vergrösserndes Nacheilen der Zeitmesseinrichtungen der Stationen durch Aufaddieren der Funklaufzeiten, bis auf diejenigen, die in abgeschalteten Stationen oder in Stationen sind, zu denen keine Verbindung besteht. Bei einem schnellen Wechsel der Übertragungsrichtung kann aber bald der Zeitpunkt erreicht sein, in dem zwischen den Stationen mit den wegen der Funklaufzeiten immer mehr nacheilenden Zeitmesseinrichtungen und den zeitweilig abgeschalteten oder ohne Verbindung gewesenen Stationen keine Synchronisation und damit Verbindung mehr möglich ist.

Der Erfindung liegt daher die Aufgabe zugrunde, ein digitales Funkübetragungssystem der eingangs genannten Art derart auszugestalten, dass der Einfluss der Funklaufzeiten unterdrückt wird.

Die Lösung dieser Aufgabe erfolgt durch die im Patentanspruch angegebenen Mittel.

Durch die vorgeschlagenen Massnahmen bleiben alle Zeitmesseinrichtungen der Sende/Empfangsgeräte des Funkübertragungssystemes in der vorgesehenen zeitlichen Toleranzschere und können somit sich jederzeit aufeinander synchronisieren und eine Verbindung herstellen.

Die Erfindung wird nun anhand von Diagrammen näher erläutert. Es zeigen:

Fig. 1 ein Diagramm zur Erläuterung der Begriffe;

Fig. 2 ein Diagramm für einen grossen Nachlauf der Zeitmesseinrichtung im sendenden Sende/Empfangsgerät;

Fig. 3 ein Diagramm mit einem grossen Vorlauf der Zeitmesseinrichtung und

Fig. 4 ein Diagramm mit geringem Vor- und Nachlauf der Zeitmesseinrichtung im sendenden Sende/Empfangsgerät.

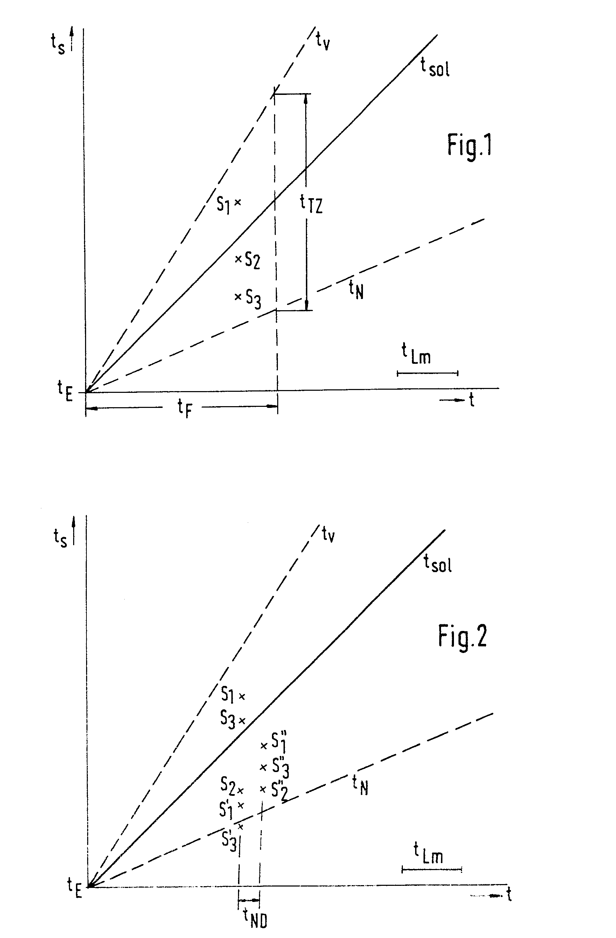

In Fig. 1 ist im dargestellten Diagramm auf der horizontalen Achse die absolute Zeit t und auf der vertikalen Achse die Zeit $t_S$ der Sende/Empfangsgeräte des digitalen Funkübertragungssystems dargestellt. Im Funkübertragungssystem soll eine Erstsynchronisation zum Zeitpunkt $t_E$ stattgefunden haben und in diesen Zeitpunkt ist der Koordinatenursprung gelegt.

Die Sollzeit $t_{SOL}$ der Sende/Empfangsgeräte ist als durchgezogene Linie eingetragen und sie verläuft unter 45° vom Zeitpunkt $t_E$ aus. Die zugelassene zeitliche Toleranz ist in ihren Grenzen durch gestrichelte Linien mit der Bezeichnung $t_V$ und $t_N$ für die Vor- bzw. Nacheilung eingetragen. Die Zeiten $t_S$ der Sende/Empfangsgeräte können in einer zulässigen Funkpause $t_F$ um den maximalen Zeitbetrag $t_{TZ}$ voneinander abweichen.

Die sich aus der Reichweite der Sende/Empfangsgeräte im Funkübertragungssystem ergebende maximale Funklaufzeit $t_{Lm}$ ist als Zeitspanne eingezeichnet.

Von den möglichen und vorzugsweise mobilen Sende/Empfangsgeräten $S_n$ in dem Funkübertragungssystem sind nur drei mit x angedeutet und mit $S_1$, $S_2$ bzw. $S_3$ bezeichnet. Die Zeitmesseinrichtung, im folgenden kurz Uhr genannt, im Sende/Empfangsgerät $S_1$ eilt vor, so dass $S_1$ oberhalb der Linie der Sollzeit $t_{SOL}$ gezeichnet ist. Die Uhren in den Sende/Empfangsgeräten $S_2$ und $S_3$ gehen nach, so dass $S_2$ und $S_3$ unterhalb der Linie der Sollzeit $t_{SOL}$ gezeichnet sind. Alle Uhren der drei Sende/Empfangsgeräte befinden sich aber noch innerhalb der zugelassenen zeitlichen Toleranzgrenzen $t_V$ und $t_N$; die zulässige Funkpause $t_F$ ist noch nicht überschritten. Die zulässige Funkpause $t_F$ beginnt für alle Sende/Empfangsgeräte, die eine Synchronisationsinformation empfangen oder gesendet haben, wieder bei 0.

In Fig. 2 sind die Verhältnisse wiedergegeben, die sich bei einer um mehr als die maximale Funklaufzeit $t_{Lm}$ nacheilenden Uhr im Sende/Empfangsgerät $S_2$ gegenüber den Uhren in den anderen Sende/Empfangsgeräten $S_1$ und $S_3$ ergeben. Wenn das Sende/Empfangsgerät $S_2$ sendet, stellen sich die Uhren der empfangenden Sende/Empfangsgeräte $S_1$ und $S_3$ auf die Zeit $t_{S2}$ unter Berücksichtigung der Funklaufzeit $t_{L2-1}$ bzw. $t_{L2-3}$ ein. Ihre neue Lage ist mit $S_1'$ bzw. $S_3'$ bezeichnet. Da die Uhr im sendenden Sende/Empfangsgerät $S_2$ um mehr als die maximale Funklaufzeit $t_{Lm}$ gegenüber den anderen Uhren nachgeht, werden diese nach der Nachrichtenübertragung um den Betrag der maximalen Funklaufzeit $t_{Lm}$ vorgestellt. Diese Lage ist mit $S_1''$ bzw. $S_3''$ gekennzeichnet. Unter der Annahme, dass die Uhr im Sende/Empfangsgerät $S_2$ während der Nachrichtenübertragung eine Abweichung aufweist, ergibt sich die durch $S_2''$ gekennzeichnete neue Lage. Mit $t_{ND}$ ist die Dauer der Nachrichtenübertragung bezeichnet.

Würde die vorstehend angegebene Massnahme zur Kompensation der Funklaufzeit nicht durchgeführt und das Sende/Empfangsgerät $S_3$ anschliessend von der Stelle $S_3'$ aus senden, dann stellten sich die Uhren in den Sende/Empfangsgeräten $S_1$ und $S_2$ aufgrund der Funklaufzeiten $t_{L3-2/1}$ auf eine Zeit $t_S$ ausserhalb der zeitlichen Toleranz $t_N$ ein. Zwischen diesen Sende/Empfangsgeräten und einem Sende/Empfangsgerät nahe der zeitlichen Toleranz $t_V$ (nicht dargestellt), das wegen einer Abschaltung bis auf seine Uhr oder wegen eines Funkschattens nicht an dem Verstellen der Uhren teilgenommen hat, kann keine Verbindung mehr möglich sein, da zwischen ihnen ein Zeitunterschied von mehr als dem zulässigen Zeitbetrag $t_{TZ}$ bestehen kann.

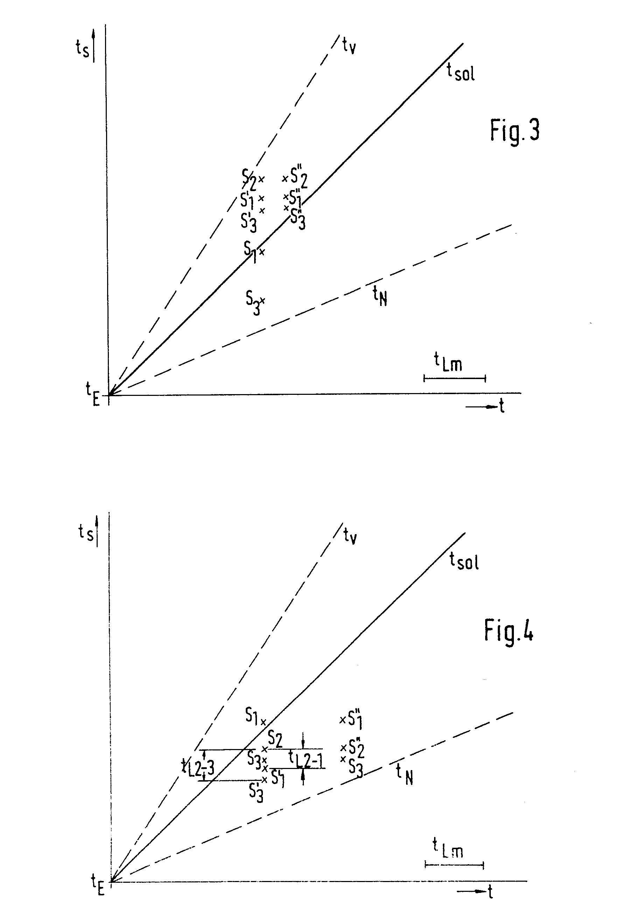

In Fig. 3 sind die Verhältnisse wiedergegeben, die sich bei einer um mehr als die maximale Funklaufzeit $t_{Lm}$ vorlaufenden Uhr im sendenden Sende/Empfangsgerät $S_2$ gegenüber den Uhren in den anderen Sende/Empfangsgeräten $S_1$ und $S_3$ ergeben. Die empfangenden Sende/Empfangsgeräte $S_1$ und $S_3$ stellen ihre Uhren auf die Zeit $t_{S2}$ unter Berücksichtigung der Funklaufzeit $t_{L2-1}$ bzw. $t_{L2-3}$ ein. Ihre neue Lage ist mit $S_1'$ bzw. $S_3'$ bezeichnet. Da die Uhr im sendenden Sende/Empfangsgerät $S_2$ um mehr als die maximale Funklaufzeit $t_{Lm}$ gegenüber den Uhren in den empfangenden Sende/Empfangsgeräten $S_1$ und $S_3$ vorlief, bleiben deren Uhren nach der Nachrichtenübertragung auf ihren eingestellten Werten unverändert stehen. Die neue Lage nach der Nachrichtenübertragung ist mit $S_1''$, $S_2''$ bzw. $S_3''$ bezeichnet. Es ist angenommen, dass die Uhr von $S_2$ sich während der Übertragung auf die Sollzeit $t_{SOL}$ zubewegt hat.

Dies muss so sein, weil bei einer Nachstellung der Uhr im empfangenden Sende/Empfangsgerät $S_1$ um den Betrag der maximalen Funklaufzeit $t_{Lm}$ die neue Zeit ausserhalb der zeitlichen Toleranz $t_V$ liegen würde. Eine Verbindung dieses Sende/Empfangsgerätes $S_1$ mit einem Sende/Empfangsgerät (nicht dargestellt) an der unteren zeitlichen Toleranz $t_N$ könnte nicht mehr möglich sein, da zwischen ihnen ein Zeitunterschied von mehr als dem zulässigen Zeitbetrag $t_{TZ}$ bestehen könnte.

In Fig. 4 ist das Sende/Empfangsgerät $S_2$ als dasjenige mit einem geringen Nachlauf bzw. Vorlauf seiner Uhr gegenüber den Uhren in den anderen Sende/Empfangsgeräten $S_1$ bzw. $S_3$ als sendend angenommen. Die Sende/Empfangsgeräte $S_1$ und $S_3$ empfangen die Sendung und stellen deshalb jeweils ihre Uhr auf die zeit $t_{S2}$ unter Berücksichtigung der Funklaufzeit $t_{L2-1}$ bzw. $t_{L2-3}$ ein. Ihre neue Lage ist mit $S_1'$ bzw. $S_3'$ bezeichnet. Da die Uhr im sendenden Sende/Empfangsgerät $S_2$ gegenüber den Uhren in den empfangenden Sende/Empfangsgeräten $S_1$ und $S_3$ weniger als die maximale Funklaufzeit $t_{Lm}$ nachlief – Sende/Empfangsgerät $S_1$ – bzw. voreilte – Sende/Empfangsgerät $S_3$ – werden die Uhren nach der Nachrichtenübertragung in den empfangenden Sende/Empfangsgeräten $S_1$ und $S_3$ wieder auf den Wert gestellt, den sie vorher hatten. Ihre neue Lage ist mit $S_1''$ bzw. $S_3''$ bezeichnet. Unter der Annahme, dass während der Nachrichtenübertragung die Uhr des Sende/Empfangsgerätes $S_2$ noch mehr nachlief, ergibt sich die neue Lage $S_2''$. Auch jetzt befinden sich alle Sende/Empfangsgeräte $S_1$ bis $S_3$ noch innerhalb der zeitlichen Toleranzgrenzen $t_V$ und $t_N$.

Bei einem digitalen Funkübertragungssystem, das mit einer festen Trägerfrequenz oder auf wechselnden Trägerfrequenzen arbeitet, und bei dem die Nachrichten verschlüsselt übertragen werden und die Steuerung des Schlüsselwechsels durch Zeitmesseinrichtungen in den einzelnen Sende/Empfangsgeräten erfolgt, kann die gleiche Nachstellung der Zeitmesseinrichtungen zum Ausgleich der Funklaufzeiten erfolgen.

Es wurde oben beschrieben, wie die Zeiten in den einzelnen Stationen eingestellt werden müssen, damit ihre Abweichungen von der Sollzeit in einem vorgegebenen Toleranzbereich verbleiben. Hierzu ist es notwendig, dass

– in allen Stationen eine Uhr vorhanden ist,
– die sendende Station ihre eigene Stationszeit zu der empfangenden Station überträgt,
– in der empfangenden Station die Differenz zwischen der Zeit der sendenden Station und ihrer eigenen Zeit gebildet und dieser Wert gespeichert wird, und
– in der empfangenden Station eine Steuereinrichtung vorgesehen ist, die abhängig vom Vergleich der gemessenen und dann gespeicherten Zeitdifferenz und einem fest vorgegebenen Wert (dies ist die maximale Funklaufzeit) die Zeit in der empfangenden Station neu einstellt oder unverändert lässt.

Bei den hierzu notwendigen Einrichtungen handelt es sich um Einrichtungen, die von anderen Anwendungen her bekannt sind. Kennt der Fachmann die Funktionsweise des neuen und oben beschriebenen digitalen Funkübertragungssystems, dann bereitet ihm die Realisierung unter Verwendung der an sich bekannten Einrichtungen keine Schwierigkeit. Es ist zu beachten, dass oben zwischen sendenden und empfangenden Stationen unterschieden wurde. Da jedoch jede sendende Station auch empfangende Station sein kann (und umgekehrt), müssen in jeder Station die Einrichtungen der (oben) sendenden und der (oben) empfangenden Station vorhanden sein.

**Patentanspruch**

Digitales Funkübertragungssystem mit mehreren mobilen Sende/Empfangsgeräten ($S_1$ bis $S_3$) mit je einer Zeitmesseinrichtung, die annähernd synchron arbeiten, bei dem jedes Sende/Empfangsgerät (z.B. $S_2$) beim Senden seine Stationszeit vor der Nachricht sendet und beim Empfangen seine Zeitmesseinrichtung auf die empfangene Stationszeit einstellt, dadurch gekennzeichnet, dass in jeder Sende/Empfangsstation (z.B. $S_1$, $S_3$) beim Empfangen die Differenz zwischen empfangener Stationszeit und der eigenen Stationszeit gemessen und gespeichert wird, und dass nach dem Ende des Nachrichtenempfanges die Zeitmesseinrichtung bei einem Betrag der Differenz, der kleiner als ein vorgegebener Wert ($t_{Lm}$) ist, wobei dieser der maximalen Funklaufzeit im System entspricht, auf die eigene Stationszeit eingestellt wird, und bei einer negativen Differenz, die grösser als der vorgegebene Wert ist, um den vorgegebenen Wert vorgestellt wird.

**Claim**

Digital radio communication system comprising a plurality of mobile transceivers ($S_1$ to $S_3$) each having a time-measuring device, said devices operating almost synchronously, wherein each transceiver (e.g. $S_2$), when transmitting, transmits its station time before the transmission and, when receiving, sets its time-measuring device to the station time received, characterized in that, in each transceiver station (e.g. $S_1$, $S_3$), the difference between the received station time and the station's own time is measured and stored, and that after the end of reception of the transmission the time-measuring device, if the amount of the difference is smaller than a preset value ($t_{Lm}$), said value corresponding to the maximum radio transit time in the system, is set to the station's own station time, and, if there is a negative difference which is greater than the present time, is advanced by the preset time.

## Revendication

Système de communication radio numérique comprenant une pluralité d'émetteurs-récepteurs mobiles ($S_1$ à $S_3$) comportant chacun un dispositif de mesure de temps ayant un fonctionnement à peu près synchrone, dans lequel, chaque émetteur-récepteur (par exemple $S_2$) envoie à l'émission son propre temps de station, avant une transmission, et se règle à la réception sur le temps de station reçu, caractérisé en ce que, dans chaque émetteur-récepteur (par exemple $S_1$, $S_3$) en réception, la différence entre le temps de station reçu et le propre temps de station est mesurée et enregistrée, et, après la fin d'une transmission reçue, le dispositif de mesure de temps est réglé sur le propre temps de station, si la valeur de la différence est plus petite qu'une valeur prédéterminée ($t_{Lm}$), correspondant au temps de transit radio maximal dans le système, et il est avance de la valeur prédéterminée, si la différence est négative et plus grande que la valeur prédéterminée.

Fig.1

Fig.2

Fig. 3

Fig. 4